# EUROPÄISCHE PATENTSCHRIFT

(11) **EP 0 642 714 B1**
(45) Veröffentlichungstag und Bekanntmachung des Hinweises auf die Patenterteilung: **04.10.2001**
(21) Anmeldenummer: 94911064.7
(22) Anmeldetag: 22.03.1994
(51) Int. Cl.: H04B 1/16, H04B 1/30

(54) **RUNDFUNKEMPFÄNGER MIT DIGITALER SIGNALVERARBEITUNG**
RADIO RECEIVER WITH DIGITAL SIGNAL PROCESSING
RECEPTEUR RADIO A TRAITEMENT NUMERIQUE DE SIGNAUX

(30) Priorität: 24.03.1993 DE 4309518
(43) Veröffentlichungstag der Anmeldung: 15.03.1995
(73) Patentinhaber: Blaupunkt-Werke GmbH, 31132 Hildesheim (DE)
(72) Erfinder: CHAHABADI, Djahanyar, D-31139 Hildesheim (DE); HERRMANN, Matthias, D-31141 Hildesheim (DE); VOGT, Lothar, D-31249 Hohenhameln (DE)
(86) Internationale Anmeldenummer: DE9400324
(87) Internationale Veröffentlichungsnummer: WO9422231

(56) Entgegenhaltungen:
- EP-A- 0 320 883
- EP-A- 0 418 036
- EP-A- 0 449 199
- EP-A- 0 472 865
- SIGNAL PROCESSING IV : THEORIES AND APPLICATIONS, Bd.2, 5. September 1988, GRENOBLE,FR Seiten 499 - 502, XP93955 REICH ET AL 'DIGITAL FM-STEREO DEMODULATION AND DECODING'

## Beschreibung

Die Erfindung betrifft einen Rundfunkempfänger mit digitaler Signalverarbeitung.

Insbesondere bei Autoradios kann die Empfangsqualität stark schwanken - beispielsweise durch Mehrwege-Empfang, durch Empfang von Störsignalen oder durch Einbrüche der empfangenen Feldstärke. Um die dadurch bedingten Störungen möglichst gering zu halten, sind verschiedene Maßnahmen zur Markierung dieser Störungen im Audiosignal bekannt geworden. So ist es beispielsweise bei einem schlechten Empfang möglich, die Audiosignale vorübergehend zu dämpfen oder die Stereo-Kanaltrennung zu verringern. Diese Maßnahmen setzen voraus, daß Störungen im empfangenen Signal einwandfrei bestimmt werden können.

Aus EP 0 418 036 A2 ist eine Schaltungsanordnung bekannt, die im Falle von Störungen in einem empfangenen Stereo-Multiplexsignal die Einsatzfrequenz der Stereo-Kanaltrennung beim wiederzugebenden Audiosignal mittels eines im Signalpfad des Stereo-Differenzsignals angeordneten steuerbaren Tiefpassfilter beeinflußt. Dazu werden aus dem empfangenen Stereo-Multiplexsignal ein erstes und ein zweites Hilfssignal abgeleitet und zur Bildung eines das Vorhandensein von Störungen anzeigenden Störungssignal, das zur Steuerung des Tiefpaßfilters herangezogen wird, kombiniert.

Aus EP 0 320 883 A2 ist ein Rundfunkempfänger mit einer Schaltungsanordnung zur feldstärkeabhängigen Beeinflussung aus einem empfangenen Stereo-Multiplexsignal abgeleiteter Nutzsignale bekannt. Ein erstes, die aktuelle Empfangsfeldstärke anzeigendes Hilfssignal wird einer Tiefpaßfilterung zugeführt, die von dem Nutzsignal herrührende Schwankungen im Feldstärkesignal unterdrückt, so daß das tiefpaßgefilterte erste Hilfssignal unmittelbar zur Beeinflussung der Nutzsignale herangezogen werden kann. Weiterhin wird aus dem die Empfangsfeldstärke anzeigenden Signal mittels eines Hochpasses ein zweites Hilfssignal erzeugt, das durch verschlechterte Empfangsbedingungen bedingte Feldstärkeeinbrüche detektiert und im Falle eines Feldstärkeeinbruchs die Zeitkonstante des Tiefpassfilters umschaltet, so daß im Falle von Feldstärkeeinbrüchen unmittelbar eine Beeinflussung der Nutzsignale erfolgen kann.

Aufgabe der vorliegenden Erfindung ist es, ein verbessertes Verfahren zur störabhängigen Beeinflussung aus einem empfangenen Rundfunksignal abgeleiteter Nutzsignale und einen verbesserten Rundfunkempfänger mit einer Anordnung zur störabhängigen Beeinflussung der Nutzsignale anzugeben, bei welchen Störungen im empfangenen Signal, insbesondere solche, die auch zu hörbaren Störungen im Nutzsignal führen, erkannt und daraus Signale zur Steuerung der Wiedergabe der Audiosignale abgeleitet werden. Eine weitere Aufgabe der vorliegenden Erfindung besteht darin, eine digitale Signalverarbeitung der empfangenen Rundfunksignale bzw. der daraus abgeleiteten nutz- und störungsanzeigenden Signale anzugeben.

Diese Aufgabe wird erfindungsgemäß dadurch gelöst,
- daß aus einem empfangenen Stereo-Multiplexsignal ein erstes und ein zweites Hilfssignal abgeleitet werden, wobei das erste Hilfssignal von dem Vorhandensein von Signalanteilen abhängt, deren Frequenz oberhalb des Nutzfrequenzbereichs des Stereo-Multiplexsignals liegt und wobei das zweite Hilfssignal von der Symmetrie der Seitenbänder des Stereo-Hilfsträgers abhängt,
- daß das erste und das zweite Hilfssignal zur Bildung eines das Vorhandensein von Störungen anzeigenden Störungssignals kombiniert werden und
- daß aus dem Störungssignal mindestens ein Steuersignal zur Beeinflussung der durch eine Decodierung des Stereo-Multiplexsignals gewonnenen Audiosignale abgeleitet wird.

Der erfindungsgemäße Rundfunkempfänger hat durch die Nutzung zweier Hilfssignale den Vorteil, daß auf verschiedenartige Störungen angemessen reagiert werden kann. So ist beispielsweise durch die Verwendung des ersten Hilfssignals eine schnelle und empfindliche Reaktion auf Störungen möglich, selbst wenn Sender empfangen werden, die keinen modulierten Hilfsträger, insbesondere kein hilfsträgerfrequentes Stereo-Differenzsignal aussenden. Die Verwendung des zweiten Hilfssignals hat den Vorteil, daß Störungen nur erkannt werden, wenn sie sich wirklich auf eine Beeinträchtigung des Audiosignals auswirken.

Obwohl bei dem erfindungsgemäßen Rundfunkempfänger auch eine Verarbeitung der Hilfssignale mit einem großen Wertebereich, von beispielsweise 256 Werten, möglich ist, richten sich verschiedene Ausführungsformen auf eine Verarbeitung als binäre Signale, die nur die Pegel 0 und 1 einnehmen können.

Eine erste vorteilhafte Ausführungsform des erfindungsgemäßen Rundfunkempfängers besteht darin, daß das erste und das zweite Hilfssignal in binäre Signale umgewandelt werden, welche zur Bildung des Störungssignals logisch verknüpft werden. Außer einer relativ einfachen weiteren Verarbeitung der binären Signale besteht ein Vorteil dieser Ausführungsform darin, daß eine Wahl der logischen Verknüpfung (Und-Verknüpfung oder Oder-Verknüpfung) oder auch eine ausschließliche Nutzung eines der Hilfssignale programmierbar ist. So können beispielsweise bei nach dieser Ausführungsform hergestellten Rundfunkempfängern diejenigen, welche für Länder ohne Stereo-Signalübertragung ausgeliefert werden, derart programmiert werden, daß nur das erste Hilfssignal ausgewertet wird.

Eine zweite vorteilhafte Ausführungsform des erfindungsgemäßen Rundfunkempfängers ist dadurch gekennzeichnet, daß das erste und das zweite Hilfssignal mit jeweils einem Koeffizienten bewertet addiert werden und daß in Abhängigkeit davon, ob die daraus entstandene Summe größer oder kleiner als ein Schwellwert ist, ein binäres Störungssignal erzeugt wird. Diese Ausführungsform hat gegenüber der ersten Ausführungsform den Vorteil, daß eine größere Vielfalt der Kombinationsmöglichkeiten der beiden Hilfssignale gegeben ist.

Bei einer dritten vorteilhaften Ausführungsform des Rundfunkempfängers ist vorgesehen, daß ein erstes Steuersignal zur Dämpfung der Audiosignale und ein zweites Steuersignal zur Herabsetzung der Kanaltrennung im Stereo-Decoder während des Auftretens von Störungen erzeugt werden und daß zur Bildung jeweils eines Steuersignals das erste und das zweite Hilfssignal nach Bewertung mit verschiedenen Koeffizienten addiert werden, daß aus den Summen durch Vergleich mit einem Schwellwert jeweils ein binäres Störungssignal erzeugt wird, aus welchen das erste und das zweite Steuersignal abgeleitet werden. Diese Ausführungsform ermöglicht zur Erzeugung der verschiedenen Steuersignale auch verschiedene Kombinationen des ersten und zweiten Hilfssignals.

Während die Störungen je nach ihrer Ursache einen unterschiedlichen zeitlichen Verlauf aufweisen, sind der Beeinflussung der Audiosignale Grenzen gesetzt, damit keine zusätzlichen Störungen entstehen. Deshalb ist bei einer Weiterbildung der Erfindung vorgesehen, daß das Störungssignal einer zeitlichen Filterung unterworfen ist. Dabei ist vorzugsweise vorgesehen, daß die zeitliche Filterung aus einem Impulslängendiskriminator und einem anschließenden Integrator mit für die Integrationsrichtungen verschiedenen Zeitkonstanten gebildet wird. Dadurch wird einerseits vermieden, daß aufgrund von sehr kurzen Störungen bereits ein Eingriff in die Audiosignale erfolgt. Andererseits ist gewährleistet, daß eine Verminderung der Lautstärke bzw. der Kanaltrennung zu Beginn der Störung möglichst schnell erfolgt, während eine Rückkehr auf den ursprünglichen Pegel allmählich vorgenommen wird.

Die Wirkung von Störungen im empfangenen Signal ist von der Empfangsfeldstärke abhängig. Es ist daher bei einer anderen Weiterbildung vorgesehen, daß das gefilterte Störungssignal mit einem von der Empfangsfeldstärke abhängigen Feldstärkesignal zur Bildung eines Steuersignals multipliziert wird.

Eine vorteilhafte Ausführungsform dieser Weiterbildung besteht darin, daß ein erstes gefiltertes Störungssignal mit einem ersten Feldstärkesignal zur Bildung eines Steuersignals für die Dämpfung der Audiosignale multipliziert wird und daß ein zweites gefiltertes Störungssignal mit einem zweiten Feldstärkesignal zur Bildung eines die Kanaltrennung herabsetzenden Steuersignals multipliziert wird. Dadurch kann die Abhängigkeit der Steuersignale von der Empfangsfeldstärke unabhängig voneinander gewählt werden.

Ausführungsbeispiele der Erfindung sind in der Zeichnung anhand mehrerer Figuren dargestellt und in der nachfolgenden Beschreibung näher erläutert. Es zeigt:
- Fig. 1: ein erstes Ausführungsbeispiel,
- Fig. 2: wesentliche Teile eines Rundfunkempfängers zur Erläuterung der Erfindung,
- Fig. 3: ein zweites Ausführungsbeispiel,
- Fig. 4: ein bei dem Ausführungsbeispiel nach Fig. 3 verwendetes logisches Netzwerk,
- Fig. 5: ein Teil eines bei den Ausführungsbeispielen verwendeten Zeitfilters,
- Fig. 6: ein weiteres Teil eines Zeitfilters,
- Fig. 7: ein drittes Ausführungsbeispiel und,
- Fig. 8: ein viertes Ausführungsbeispiel.

Gleiche Teile sind in den Figuren mit gleichen Bezugszeichen versehen. Der erfindungsgemäße Rundfunkempfänger kann auf verschiedene Weise verwirklicht werden. So können beispielsweise einzelne oder Gruppen der dargestellten Blöcke durch geeignete Schaltungen, insbesondere integrierte Schaltungen, realisiert werden. Bei sehr hohem Integrationsgrad ist es ferner möglich, die gesamte digitale Signalverarbeitung des Empfängers in einem integrierten Schaltkreis zu realisieren, wobei Signalverarbeitungsschritte, wie beispielsweise Filterungen oder nichtlineare Wichtungen, durch Rechenoperationen durchgeführt werden. Innerhalb eines integrierten Schaltkreises können zur Realisierung eines erfindungsgemäßen Empfängers auch digitale Signalprozessoren und andere digitale Schaltungen, wie beispielsweise Schieberegister, Flip-Flops usw., gemeinsam angeordnet sein.

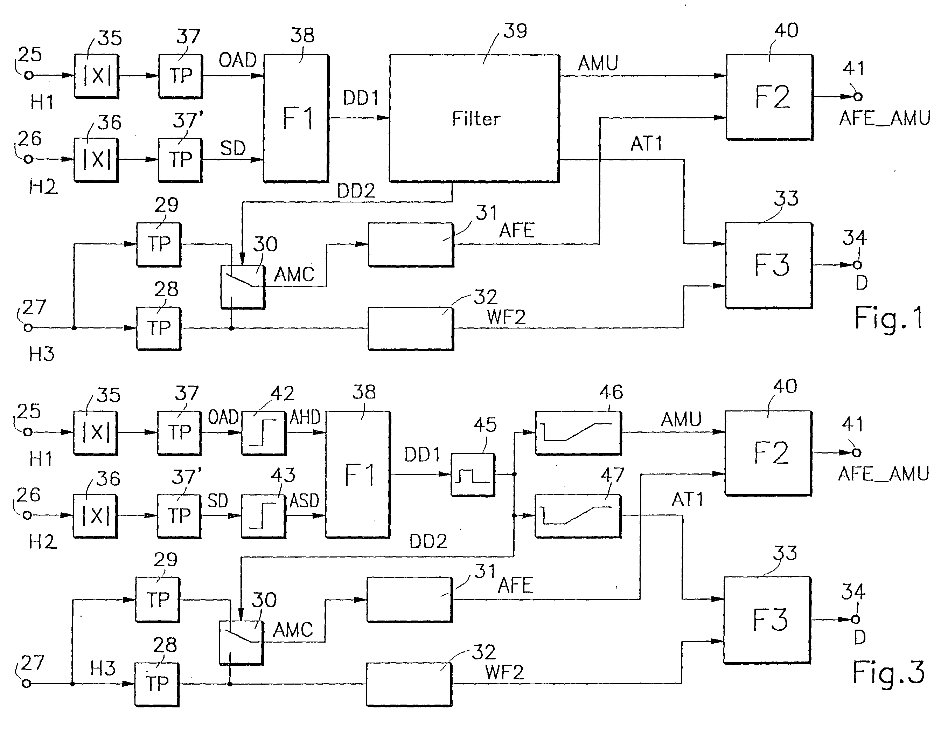

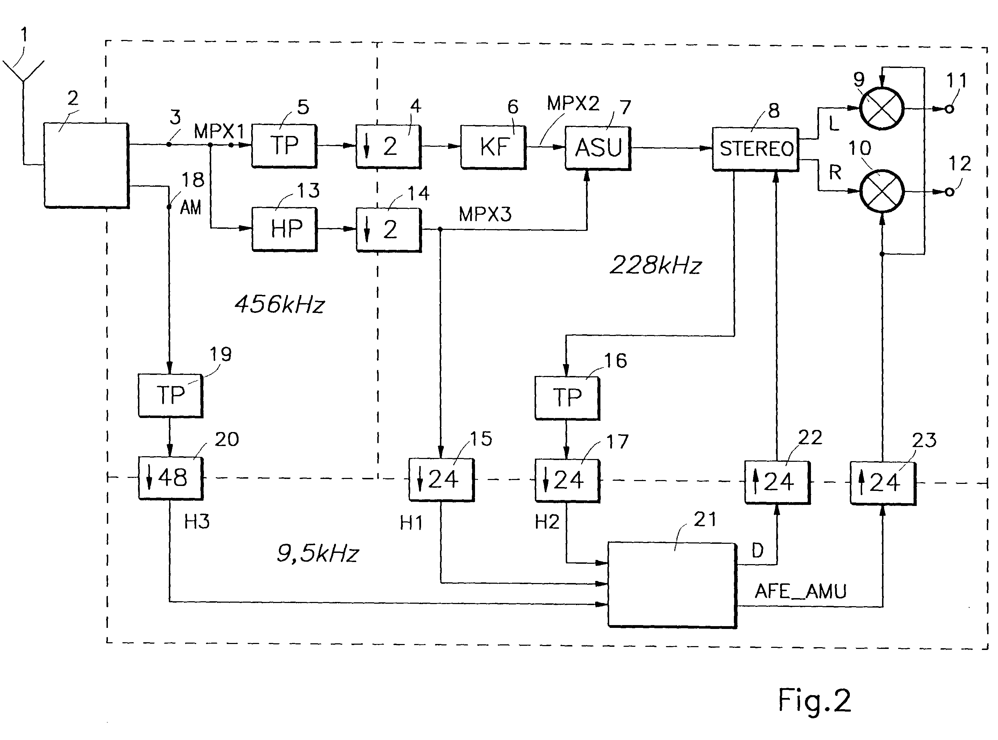

Die anhand der Figuren 1, 3, 7 und 8 erläuterten Ausführungsbeispiele sind Teile eines Rundfunkempfängers mit digitaler Signalverarbeitung, für den ein Ausführungsbeispiel in Fig. 2 dargestellt ist. Um die Ausführungsbeispiele und deren Funktion besser erläutern zu können, wird zunächst der in Fig. 2 dargestellte Rundfunkempfänger beschrieben.

Das über eine Antenne 1 empfangen Signal in einem Empfangsteil (Tuner) 2 in an sich bekannter Weise verstärkt, selektiert und demoduliert. An einem Ausgang 3 des Empfangsteils 2 steht ein Stereo-Multiplexsignal MPX1 mit einer Abtastrate von 456 kHz zur Verfügung. Um eine anschließende Abtastraten-Herabsetzung - auch Dezimation genannt - auf 228 kHz ohne Alias-Störungen zu erreichen, ist vor der Abtastraten-Herabsetzung 4 ein Tiefpaßfilter 5 vorgesehen. Zu einer einwandfreien weiteren Verarbeitung des Stereo-Multiplexsignals ist an sich ein Tiefpaßfilter mit im Durchlaßbereich ebenem Frequenzgang erforderlich. Um den dafür benötigten Aufwand, insbesondere bei der hohen Abtastrate von 456 kHz, zu ersparen, ist bei dem Ausführungsbeispiel ein einfacheres Tiefpaßfilter mit abfallendem Frequenzgang vorgesehen. Der Frequenzgangabfall wird allerdings in einem anschließenden Kompensationsfilter 6 kompensiert.

Das Stereo-Multiplexsignal MPX2 wird danach über eine Schaltung 7 zur automatischen Störunterdrückung geführt, die insbesondere bei Auftreten von Funkenstörungen Abtastwerte vor dem Beginn der Störung bis zum Ende der Störung wiederholt. An diese Schaltung schließt sich ein Stereodecoder 8 an, der zwei Audiosignale L, R erzeugt, die über Multiplizierer 9, 10 zu Ausgängen 11, 12 geleitet werden. Von dort aus werden die Audiosignale über NF-Verstärker den Lautsprechern zugeführt.

Aus dem Stereo-Multiplexsignal MPX1 wird mit Hilfe eines Hochpasses 13 und einer Dezimations Schaltung 14 ein Signal erzeugt, das oberhalb des Nutzfrequenzbereichs des Stereo-Multiplexsignals vorhandene Signalanteile enthält, die jedoch durch die Dezimation in einen unteren Frequenzbereich gefaltet sind. Dieses Signal MPX3 zeigt verschiedene Störungen an, beispielsweise die durch Zündfunken von Fahrzeugen entstehenden Störungen. Es wird einerseits zur Steuerung der Schaltung 7 zur automatischen Störunterdrückung und andererseits zur Bildung eines Hilfssignals H1 durch Dezimation der Abtastrate auf 9,5 kHz bei 15 verwendet.

Ein weiteres Hilfssignal, dessen Abtastrate ebenfalls 9,5 kHz beträgt, wird durch Tiefpaßfilterung bei 16 und Dezimation bei 17 aus einem Symmetriesignal SY gebildet. Dieses wird wiederum im Stereodecoder 8 geformt. Dort wird bekanntlich der Stereo-Hilfsträger zur Bildung des Differenzsignals L-R amplitudendemoduliert. Dieses geschieht dadurch, daß der Hilfsträger mit einem im Rundfunkempfänger regenerierten Hilfsträger gleicher Phasenlage multipliziert wird. In dem Stereodecoder 8 wird der Stereo-Hilfsträger zusätzlich mit einem um 90° gegenüber dem Referenzträger gedrehten Träger multipliziert, wodurch ein Signal entsteht, das bei symmetrischen Seitenbändern des Stereo-Hilfsträgers 0 ist und bei Unsymmetrien entsprechend von 0 abweicht. Aus diesem Signal wird durch Tiefpaßfilterung bei 16 und Dezimation bei 17 das weitere Hilfssignal H2 gebildet.

An einem Ausgang 18 gibt das Empfangsteil 2 ein Signal AM ab, das durch Amplitudendemodulation des FM-Zwischenfrequenzsignals entsteht. Dieses weist bei dem dargestellten Ausführungsbeispiel ebenfalls eine Abtastrate von 456 kHz auf und wird nach einer Tiefpaßfilterung 19 bei 20 um den Faktor 48 dezimiert, so daß das entstehende dritte Hilfssignal H3 eine Abtastrate von 9,5 kHz aufweist.

In einer Schaltung 21 werden die Hilfssignale H1, H2 und H3 miteinander zu Steuersignalen D und AFE AMU kombiniert, deren Abtastrate zunächst 9,5 kHz beträgt, jedoch bei 22 und 23 auf 228 kHz heraufgesetzt wird. Dieses erfolgt durch eine Interpolation von jeweils 24 Abtastwerten, die im einfachsten Fall darin besteht, daß jeder Abtastwert 24 mal wiederholt wird. Das Steuersignal D wird einem Steuereingang des Stereodecoders 8 zugeführt und dient dort der Umschaltung auf Mono-Betrieb im Fall eines gestörten Empfangs. Das Signal AFE_AMU wird den Multiplizierern 9 und 10 zugeführt, wodurch eine Herabsetzung der Lautstärke (Maskierung) bei Vorliegen von Störungen vorgenommen wird.

Fig. 1 zeigt ein Ausführungsbeispiel für die Schaltung 21 (Fig. 2). Eingängen 25, 26, 27 werden die Hilfssignale H1, H2 und H3 zugeführt. Das die Empfangsfeldstärke bezeichnende Hilfssignal H3 erfährt in zwei Tiefpaßfiltern 28, 29 eine Mittelung mit unterschiedlichen Zeitkonstanten. Ein Umschalter 30 leitet in Abhängigkeit eines später zu erläuternden Signals DD2 eines der Ausgangssignale der Tiefpaßfilter 28, 29 als Signal AMC weiter. Dieses wird bei 31 in Form einer Aufrauschkurve zur Erzeugung der Aufrauschdämpfung AFE gewichtet. Das Feldstärkesignal mit der kleineren Zeitkonstante wird ferner bei 32 ebenfalls gewichtet (Signal WF2). Dieses wird bei 33 mit einem Signal AT1 zur Bildung des Steuersignals D multipliziert, das am Ausgang 34 zur Verfügung steht.

Von den bei 25 und 26 zugeführten Hilfssignalen H1 und H2 wird zunächst bei 35 und 36 jeweils der Betrag gebildet. Dieses kann beispielsweise auch durch eine Quadrierung der Hilfssignale erfolgen. An die Betragsbildung 35 schließt sich ein Tiefpaßfilter 37 an. Die dadurch entstandenen Signale OHD und SD1 werden bei 38 kombiniert. Dabei entsteht ein Signal DD1 = F1(OHD, SD). Diese Funktion hat beispielsweise die Form F1 = a1·OHD+b1·SD, wobei die Koeffizienten a1 und b1 einstellbar sein können. Andere Funktionen werden im Zusammenhang mit den weiteren Ausführungsbeispielen erläutert.

Das Signal DD1 enthält jedoch noch extrem kurze Störsignale und ist somit zur Beeinflussung der Audiosignale im Sinne einer Maskierung nicht geeignet. Deshalb wird es über ein Zeitfilter 39 geleitet, an dessen Ausgängen gefilterte Störungssignale AMU und AT1 zur Verfügung stehen. Das Signal AMU wird bei 40 mit dem gewichteten Feldstärkesignal AFE nach der Funktion F2(AMU, AFE) zu einem Signal AFE AMU kombiniert, das an einem Ausgang 41 abnehmbar ist. Mit einer Funktion F3(AT1, WF2) wird das Steuersignal D gebildet.
Vorzugsweise sind F2 = AMU·AFE und F3 = AT1·WF2.

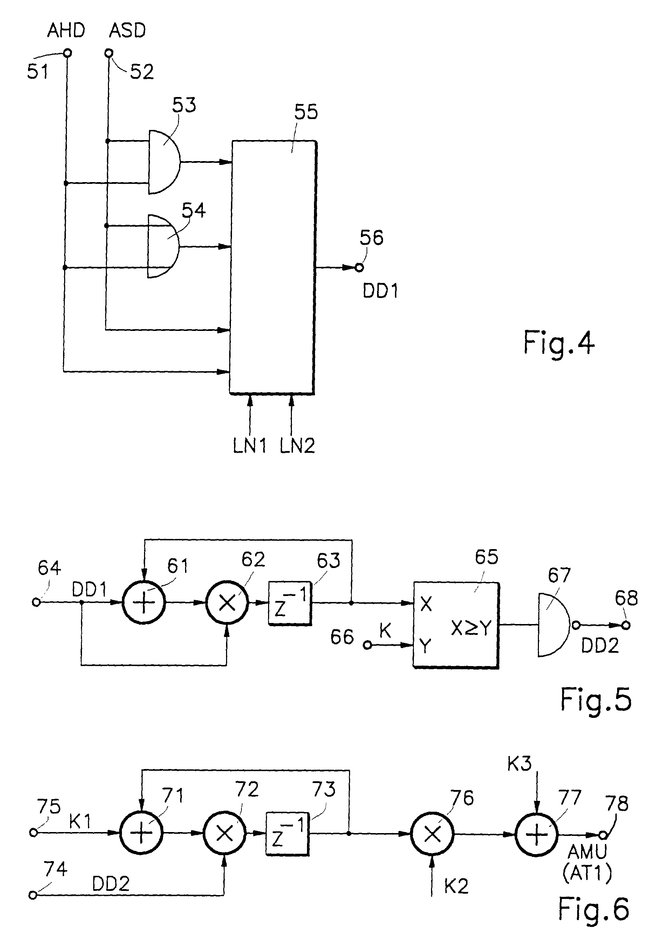

Bei dem Ausführungsbeispiel nach Fig. 3 werden aus den Signalen OAD und SD durch Schwellwertvergleiche 42, 43 binäre Signale AHD und ASD geformt, die beispielsweise mit dem Pegel 1 das Vorliegen einer Störung und mit dem Pegel 0 das Nichtvorliegen einer Störung anzeigen. Diese Signale werden in einem logischen Netzwerk 38 kombiniert, das in Fig. 4 näher erläutert wird. Das Zeitfilter 39 (Fig. 1) wird bei dem Ausführungsbeispiel nach Fig. 3 von einem Pulsbreitendiskriminator 45 und zwei asymmetrischen Integratoren 46, 47 gebildet. Ausführungsbeispiele für diese Schaltungen sind in den Figuren 5 und 6 angegeben.

Der Impulsbreitendiskriminator bewirkt, daß Impulse des Signals DD1 unterhalb einer vorgegebenen Breite nicht weitergeleitet werden, sondern lediglich Impulse, welche die vorgegebene Breite übersteigen. Mit Hilfe der asymmetrischen Integratoren 46 und 47 werden die Signale AMU und AT1 unmittelbar nach Beginn eines jeweiligen Impulses des Signals DD2 auf den zur Dämpfung erforderlichen Wert gebracht, während nach dem Ende jedes Impulses des Signals DD2 ein langsamer Abfall erfolgt.

Das logische Netzwerk gemäß Fig. 4 erlaubt die wahlweise logische Verknüpfung der beiden Signale AHD und ASD. Dazu werden die beiden Signale von den Eingängen 51, 52 über eine Und-Schaltung 53, über eine Oder-Schaltung 54 und direkt einem Umschalter 55 mit vier Eingängen zugeleitet. Mit Hilfe von zugeführten Steuersignalen LN1 und LN2 können entweder der Ausgang der Und-Schaltung 53, der Ausgang der Oder-Schaltung 54 oder einer der Eingänge 51, 52 mit einem Ausgang 56 verbunden werden. Im Falle einer Verbindung des Ausgangs 56 mit dem Ausgang der Und-Schaltung 53 nimmt das Ausgangssignal DD1 nur dann den Pegel 1 ein, wenn beide Eingangssignale AHD und ASD den Pegel 1 aufweisen. Es wird also nur eine Störung gemeldet, wenn sowohl oberhalb des Nutzfrequenzbereichs Störsignale als auch eine Asymmetrie der Seitenbänder des Hilfsträgers vorliegen. Ist der Ausgang 56 mit dem Ausgang der Oder-Schaltung 54 verbunden, wird bereits eine Störung gemeldet, wenn eines der beiden Anzeichen für eine Störung vorliegt.

Bei dem in Fig. 5 dargestellten Impulsbreitendiskriminator bilden ein Addierer 61, ein Multiplizierer 62 und ein Speicher 63 für jeweils einen Abtastwert einen Akkkumulator. Dem Addierer 61 und dem Multiplizierer 62 wird das Signal DD1 von einem Eingang 64 zugeführt. Solange das Signal DD1 gleich 0 ist, wird einem Komparator 65 auch der Wert 0 zugeleitet. Springt das Signal DD1 auf den Wert 1, beginnt die Akkumulation, wobei der Wert im Speicher 63 vom Abtastzeitpunkt sich jeweils um 1 erhöht. Ist eine einem Eingang 66 zugeführte Konstante erreicht, so gibt der Komparator 65 über einen Invertierer 67 ein Signal an den Ausgang 68. Um einen Überlauf des Ausgangssignals des Integrators über den durch die Stellenzahl gegebenen Wertebereich hinaus zu verhindern, ist eine in Fig. 6 nicht dargestellte Begrenzung vorgesehen.

Bei dem in Fig. 6 dargestellten Ausführungsbeispiel eines der asymmetrischen Integratoren 46, 47 (Fig. 3) ist ebenfalls ein Akkumulator vorgesehen, der aus einem Addierer 71, einem Multiplizierer 72 und einem Speicher 73 für einen Abtastwert besteht. In Abhängigkeit von dem bei 74 zugeführten Signal DD2 wird eine bei 75 zugeführte Konstante K1 mit jedem Takt dem Inhalt des Speichers 73 hinzuaddiert, solange das Signal DD2 den Wert 1 aufweist. Das Ergebnis wird in einem weiteren Multiplizierer 76 mit einer Konstanten K2 bewertet, worauf sich ein Addierer 77 zur Addition einer weiteren Konstanten K3 anschließt. Dem Ausgang 78 ist dann das integrierte Signal entnehmbar - im Falle des asymmetrischen Integrators 46 das Signal AMU, anderenfalls das Signal AT1.

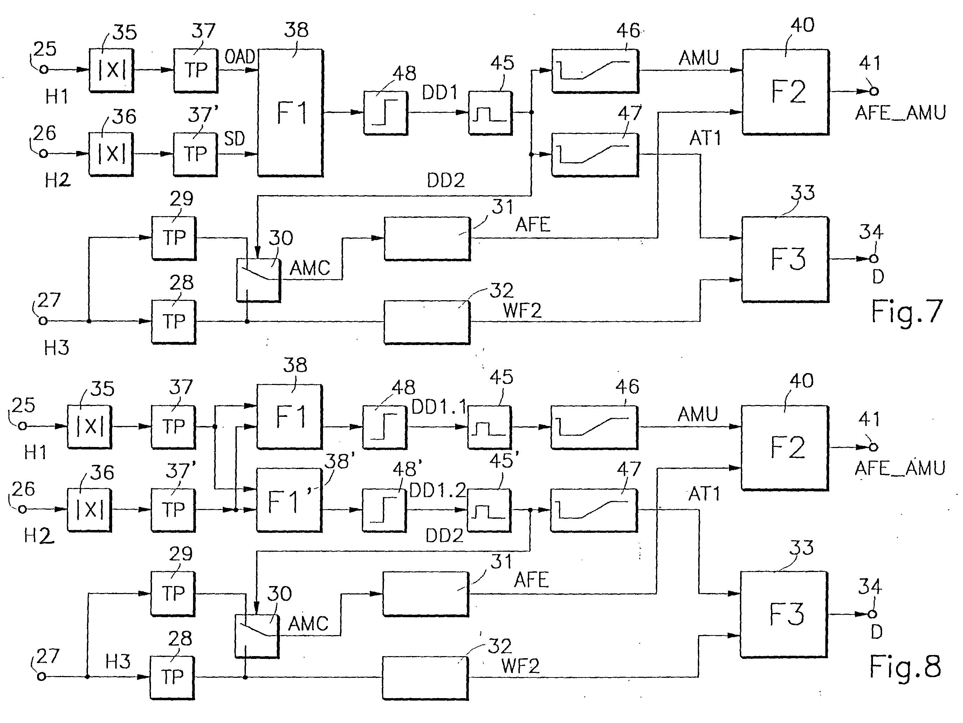

Bei dem Ausführungsbeispiel nach Fig. 7 erfolgt eine Kombination der Signale OHD und SD mit Hilfe einer Funktion F1 = a1·OHD+b1·SD. Anschließend wird bei 38 ein binäres Signal geformt, das des weiteren wie bei dem Ausführungsbeispiel nach Fig. 3 verarbeitet wird.

Fig. 8 zeigt ein Ausführungsbeispiel, bei welchem die Signale OHD und SD für die Zwecke der Dämpfung und der Kanaltrennung mit verschiedenen Funktionen kombiniert werden, nämlich mit den Funktionen F1.1 = a1·OHD+b1·OHD bei 38 und F1.2 = a2·OHD+b2·SD bei 38'. Die weitere Verarbeitung der somit entstandenen Signale DD1.1 und DD1.2 erfolgt dann wie bei dem Ausführungsbeispiel nach Fig. 3 bei 48, 45 und 46 bzw. 48', 45' und 47 zu den Signalen AMU und AT1.

Die verschiedenen bei der Signalverarbeitung verwendeten Koeffizienten bzw. Konstanten können bei der Herstellung des erfindungsgemäßen Rundfunkempfängers fest programmiert oder in veränderbarer Weise gespeichert werden. Ein erfindungsgemäßer Rundfunkempfänger mit veränderbarenKoeffizienten kann beispielsweise von einer Service-Werkstatt an sich ändernde Erfordernisse angepaßt werden - beispielsweise wenn die Benutzung eines nach der Erfindung ausgeführten Autoradios in einem Land mit anderen Sendenormen erfolgen soll oder wenn am Ort der Benutzung bestimmte Störungen häufig auftreten.

## Patentansprüche

1. Verfahren zur digitalen Verarbeitung empfangener Rundfunksignale, wobei aus einem empfangenen Stereo-Multiplexsignal (MPX 1) ein erstes und ein zweites Hilfssignal (H1, H2) abgeleitet werden, wobei das erste Hilfssignal (H1) von dem Vorhandensein von Signalanteilen abhängt, deren Frequenz oberhalb eines Nutzfrequenzbereichs des Stereo-Multiplexsignals (MPX 1) liegt und wobei das zweite Hilfssignal (H2) von der Symmetrie der Seitenbänder des Stereo-Hilfsträger abhängt, wobei das erste und zweite Hilfssignal (H1) zur Bildung eines das Vorhandensein von Störungen anzeigenden Störungssignals kombiniert werden, und wobei aus dem Störungssignals mindestens ein Steuersignal (D, AFE-AMU) zur Beeinflussung der durch eine Dekodierung (8) des Stereo-Multiplexsignals gewonnenen Audiosignale (L, R) abgeleitet wird.

2. Verfahren nach Anspruch 1, **dadurch gekennzeichnet, daß** das erste und zweite Hilfssignal (H1, H2) in binäre Signale (AHD, ASD) umgewandelt werden (42, 43), welche zur Bildung des Störungssignals (DD1) logisch verknüpft werden.

3. Verfahren nach Anspruch 1, **dadurch gekennzeichnet, daß** das erste und zweite Hilfssignal (H1, H2) mit jeweils einem Koeffizienten (a1, b1) bewertet und addiert werden (38), und **daß** in Abhängigkeit davon, ob die daraus entstandene Summe größer oder kleiner als ein Schwellwert ist, ein binäres Störsignal erzeugt wird.

4. Verfahren nach Anspruch 1, **dadurch gekennzeichnet, daß** ein erstes Steuersignal (AFE-AMU) zur Dämpfung der Audiosignale (L, R) und ein zweites Steuersignal (D) zur Herabsetzung der Kanaltrennung im Stereodecoder (8) während des Auftretens von Störungen erzeugt werden, und **daß** zur Bildung jeweils eines Steuersignals (D, AFE-AMU) das erste und das zweite Hilfssignal (H1, H2) nach Bewertung mit verschiedenen Koeffizienten (a1, b1) addiert werden, **daß** aus den Summen durch Vergleich mit einem Schwellwert jeweils ein binäres Störungssignal erzeugt wird, aus welchen das erste und das zweite Steuersignal (AFE-AMU, D) abgeleitet werden.

5. Verfahren nach einem der vorhergehenden Ansprüche, **dadurch gekennzeichnet, daß** das Störungssignal (DD1) einer zeitlichen Filterung (39) unterworfen ist.

6. Verfahren nach Anspruch 5, **dadurch gekennzeichnet, daß** die zeitliche Filterung (39) aus einem Impulslängendiskriminator (45) und einem anschließenden Integrator (46, 47) mit für die Integrationsrichtungen verschiedenen Zeitkonstanten gebildet wird.

7. Verfahren nach einem der Ansprüche 5 oder 6, **dadurch gekennzeichnet, daß** das gefilterte Störungssignal (AMU, AD1) mit einem von der Empfangsfeldstärke abhängigen Feldstärkesignal (AFE, WF2) multipliziert wird (40, 33).

8. Verfahren nach Anspruch 7, **dadurch gekennzeichnet, daß** ein erstes gefiltertes Störungssignal (AMU) mit einen ersten Feldstärkesignal (AFE) zur Bildung eines Steuersignals (AFE-AMU) für die Dämpfung der Audiosignale multipliziert wird, und **daß** ein zweites gefiltertes Störungssignal (AD1) mit einem zweiten Feldstärkesignal (WF2) zur Bildung eines die Kanaltrennung herabsetzenden Steuersignals (D) multipliziert wird.

9. Rundfunkempfänger mit digitaler Signalverarbeitung mit ersten Mitteln (13, 14, 15) zur Bildung eines ersten Hilfssignals (H1) aus einem empfangenen Stereo-Multiplexsignal, mit zweiten Mitteln (8, 16, 17) zur Bildung eines zweiten, aus dem Stereo-Multiplexsignal abgeleiteten Hilfssignals (H2), wobei das erste Hilfssignal von dem Vorhandensein von Signalanteilen abhängt, deren Frequenz oberhalb des Nutzfrequenzbereichs des Stereo-Multiplexsignals liegt und das zweite Hilfssignal von der Symmetrie der Seitenbänder des Stereo-Hilfsträgers abhängt, mit Mitteln (38) zur Bildung eines das Vorhandensein von Störungen anzeigenden Störungssignals (DD1) durch Kombinieren des ersten und zweiten Hilfssignals (H1, H2) und mit Mitteln (40, 33) zur Ableitung mindestens eines Steuersignals (AFE-AMU, D) zur Beeinflussung der durch eine Decodierung (8) des Stereo-Multiplexsignals gewonnenen Audiosignale (L, R).

## Claims

1. Method for digitally processing received broadcast radio signals, where a first and a second auxiliary signal (H1, H2) are derived from a received stereo multiplex signal (MPX 1) , where the first auxiliary signal (H1) is dependent on the presence of signal components whose frequency is above a useful frequency range of the stereo multiplex signal (MPX 1), and where the second auxiliary signal (H2) is dependent on the symmetry of the sidebands of the stereo auxiliary carrier, where the first and the second auxiliary signal (H1) are combined to form an interference signal indicating the presence of interference, and where at least one control signal (D, AFE-AMU) for influencing the audio signals (L, R) obtained by decoding (8) the stereo multiplex signal is derived from the interference signal.

2. Method according to Claim 1, **characterized in that** the first and the second auxiliary signal (H1, H2) are converted (42, 43) into binary signals (AHD, ASD) which are logically combined to form the interference signal (DD1).

3. Method according to Claim 1, **characterized in that** the first and the second auxiliary signal (H1, H2) are weighted with a respective coefficient (a1, b1) and are added (38), and **in that**, depending on whether the resultant sum is greater than or less than a threshold value, a binary interference signal is produced.

4. Method according to Claim 1, **characterized in that** a first control signal (AFE, AMU) is produced for attenuating the audio signals (L, R), and a second control signal (D) is produced for reducing the channel separation in the stereo decoder (8) during the occurrence of interference, and **in that** the first and the second auxiliary signal (H1, H2) are added after weighting with various coefficients (a1, b1) in order to form a respective control signal (D, AFE-AMU), **in that** a respective binary interference signal is produced from the sums by comparison with a threshold value, and the first and the second control signal (AFE-AMU, D) are derived from said binary interference signal.

5. Method according to one of the preceding claims, **characterized in that** the interference signal (DD1) is subjected to time-domain filtering (39).

6. Method according to Claim 5, **characterized in that** the time-domain filtering (39) is formed from a pulse length discriminator (45) and a subsequent integrator (46, 47) using different time constants for the integration directions.

7. Method according to one of Claims 5 or 6, **characterized in that** the filtered interference signal (AMU, AD1) is multiplied (40, 33) by a field strength signal (AFE, WF2) which is dependent on the reception field strength.

8. Method according to Claim 7, **characterized in that** a first filtered interference signal (AMU) is multiplied by a first field strength signal (AFE) in order to form a control signal (AFE-AMU) for attenuating the audio signals, and **in that** a second filtered interference signal (AD1) is multiplied by a second field strength signal (WF2) in order to form a control signal (D) which reduces the channel separation.

9. Broadcast radio receiver with digital signal processing having first means (13, 14, 15) for forming a first auxiliary signal (H1) from a received stereo multiplex signal, having second means (8, 16, 17) for forming a second auxiliary signal (H2), which is derived from the stereo multiplex signal, where the first auxiliary signal is dependent on the presence of signal components whose frequency is above the useful frequency range of the stereo multiplex signal, and the second auxiliary signal is dependent on the symmetry of the sidebands of the stereo auxiliary carrier, having means (38) for forming an interference signal (DD1), which indicates the presence of interference, by combining the first and the second auxiliary signal (H1, H2), and having means (40, 33) for deriving at least one control signal (AFE-AMU, D) for influencing the audio signals (L, R) obtained by decoding (8) the stereo multiplex signal.

## Revendications

1. Procédé de traitement numérique de signaux radio de réception selon lequel
- à partir d'un signal multiplex stéréo reçu (MPX 1), on déduit un premier et un second signal auxiliaire (H1, H2),
- le premier signal auxiliaire (H1) dépend de la présence de composantes de signal dont la fréquence se situe au-dessus de la plage des fréquences utiles du signal multiplex stéréo (MPX 1) , et
- le second signal auxiliaire (H2) dépend de la symétrie des bandes latérales de la porteuse auxiliaire stéréo,
- le premier et le second signal auxiliaire (H1, H2) étant combinés pour former un signal de perturbation indiquant la présence de perturbations, et
- à partir du signal de perturbation, on forme au moins un signal de commande (D, AFE_AMU) pour influencer les signaux audio (L, R) obtenus par décodage (8) du signal multiplex stéréo.

2. Procédé selon la revendication 1,
**caractérisé en ce que**
le premier et le second signal auxiliaire (H1, H2) sont convertis en signaux binaires (AHD, ASD) (42, 43) combinés de manière logique pour former le signal de perturbation (DD1) .

3. Procédé selon la revendication 1,
**caractérisé en ce que**
le premier et le second signal auxiliaire (H1, H2) sont pondérés chaque fois par un coefficient (a1, b1) et sont additionnés (38), et
en fonction de ce que la somme obtenue est supérieure ou inférieure à un seuil, on génère un signal de perturbation, binaire.

4. Procédé selon la revendication 1,
**caractérisé en ce qu'**
on génère un premier signal de commande (AFE-AMU) pour amortir les signaux audio (L, R) et un second signal de commande (D) pour réduire la séparation des canaux dans le décodeur stéréo (8) pendant l'apparition de perturbations, et
pour former chaque fois un signal de commande (D, AFE-AMU), on additionne le premier et le second signal auxiliaire (H1, H2) après pondération par différents coefficients (a1, b1),
à partir de la somme, par comparaison avec un seuil, on génère chaque fois un signal binaire de perturbation à partir duquel on déduit le premier et le second signal de commande (AFE-AMU, D) .

5. Procédé selon l'une quelconque des revendications précédentes,
**caractérisé en ce que**
le signal de perturbation (DD1) est soumis à un filtrage dans le temps (39).

6. Procédé selon la revendication 5,
**caractérisé en ce que**
le filtrage dans le temps (39) se fait à l'aide d'un discriminateur de longueur d'impulsion (45) suivi d'un intégrateur (46, 47) avec des constantes de temps différentes suivant le sens de l'intégration.

7. Procédé selon l'une quelconque des revendications 5 ou 6,
**caractérisé en ce que**
le signal de perturbation filtré (AMU, AD1) est multiplié (40, 33) par un signal d'intensité de champ (AFE, WF2) dépendant de l'intensité du champ reçu.

8. Procédé selon la revendication 7,
**caractérisé en ce qu'**
un premier signal de perturbation (AMU), filtré, est multiplié par un premier signal d'intensité de champ (AFE) pour former un signal de commande (AFE-AMU) destiné à amortir le signal audio, et
un second signal de perturbation (AD1), filtré, est multiplié par un second signal d'intensité de champ (WF2) pour former un signal de commande (D) qui réduit la séparation des canaux.

9. Récepteur radio à traitement numérique du signal, comprenant
des premiers moyens (13, 14, 15) pour former un premier signal auxiliaire (H1) à partir d'un signal multiplex stéréo reçu,
des seconds moyens (8, 16, 17) pour former un second signal auxiliaire (H2) déduit du signal multiplex stéréo,
le premier signal auxiliaire dépendant de la présence de composantes de signal dont la fréquence se situe au-dessus de la plage des fréquences utiles du signal multiplex stéréo, et
le second signal auxiliaire dépend de la symétrie des bandes latérales de la porteuse auxiliaire stéréo,
des moyens (38) pour former un signal de perturbation (DD1) indiquant la présence de perturbations en combinant le premier et le second signal auxiliaire (H1, H2) et des moyens (40, 33) servant à déduire au moins un signal de commande (AFE-AMU, D) pour influencer les signaux audio (L, R) obtenus par décodage (8) du signal multiplex stéréo.
